# EUROPÄISCHE PATENTANMELDUNG

(11) **EP 0 542 390 A1**
(43) Veröffentlichungstag der Anmeldung: **19.05.1993**
(21) Anmeldenummer: 92250336.2
(22) Anmeldetag: 13.11.1992
(51) Int. Cl.: B25J 15/02, B65G 47/90

(54) **Greifvorrichtung**

(30) Priorität: 15.11.1991 DE 4138186
(71) Anmelder: RUD-KETTENFABRIK RIEGER & DIETZ GMBH U. CO., D-73432 Aalen (DE)
(72) Erfinder: Kohler, Paul, W-7929 Heidenheim (DE)
(74) Vertreter: Böning, Manfred, Dr.-Ing.

(57) **Zusammenfassung**

Bei einer Greifvorrichtung zum Erfassen eines Gegenstandes, insbesondere Werkzeuges, werden Greifarme (11,12) verwendet, die unter Zuhilfenahme von Riegeln (18,19) und diesen zugeordneten Steuerkurven (24,25) auf rein mechanischem Wege aus einer Aufnahmeposition in eine Halteposition und umgekehrt bewegbar sind.

## Beschreibung

Die Erfindung betrifft eine Greifvorrichtung nach dem Oberbegriff des Patentanspruches 1.

Greifvorrichtungen der in Betracht gezogenen Art werden insbesondere zum Auswechseln der Werkzeuge von Werkzeugmaschinen in mehr oder weniger stark automatisierten Fertigungssystemen verwendet. Bei einer aus der DE 38 02 838 A1 bekannten Greifvorrichtung der in Betracht gezogenen Art dienen zum Erfassen des jeweiligen Gegenstandes zwei um jeweils eine Achse gegen die Wirkung einer zu jeweils einem Kniehebelmechanismus gehörenden Feder schwenkbare Greifarme. Beide Greifarme sind über jeweils ein Koppelglied mit einem Gleitstück verbunden, gegen das der zu greifende Gegenstand beim Greifvorgang zur Anlage kommt, um die Greifarme unter Überwindung der Kraft des Kniehebelmechanismus in die Halteposition zu überführen. Zur Wiederfreigabe des Gegenstandes wird dieser unter der Einwirkung einer äußeren Kraft aus den Greifarmen herausgezogen.

Der Erfindung liegt die Aufgabe zugrunde, eine Greifvorrichtung zu schaffen, mit deren Hilfe insbesondere Werkzeuge durch in Vertikalrichtung bewegbare Handhabungsgeräte auf mechanischem Wege erfaßt, sicher formschlüssig gehalten und wieder freigegeben werden können. Gelöst wird diese Aufgabe durch die Merkmale des kennzeichnenden Teiles des Patentanspruches 1, wobei die Unteransprüche weitere der zweckmäßigen Ausgestaltung der Vorrichtung dienende Merkmale enthalten.

Die erfindungsgemäße Greifvorrichtung ermöglicht nicht nur ein schnelles formschlüssiges Erfassen, sondern auch eine problemlose Wiederfreigabe von Gegenständen durch ein mit ihr ausgestattetes Handhabungsgerät, wobei in die Greifvorrichtung eingeleitete Vertikalbewegungen alternierend ein Öffnen und ein Schließen ihrer Greifarme bewirken.

Die Erfindung wird im folgenden anhand einer in der beigefügten Zeichnung dargestellten, besonders vorteilhaften Ausführungsform näher erläutert. Es zeigen:
Fig. 1 einen Schnitt durch eine Greifvorrichtung,
Fig. 2 die funktionswesentlichen Teile der Greifvorrichtung beim Aufnehmen eines Werkzeuges,
Fig. 3 die in Fig. 2 dargestellten Teile der Greifvorrichtung während des Schließvorganges ihrer Greifarme,
Fig. 4 die in Fig. 2 dargestellten Teile in der Halteposition zu Beginn des Anhebens des Werkzeuges mit Hilfe eines nicht dargestellten Handhabungsgerätes,
Fig. 5 die in Fig. 4 dargestellten Teile in der Halteposition zu Beginn des Wiederabsetzens des Werkzeuges,
Fig. 6 die in Fig. 2 dargestellten Teile in einer Zwischenphase während der Wiederfreigabe des Werkzeuges und
Fig. 7 das Abziehen der in Fig. 2 dargestellten Teile vom freigegebenen Werkzeug.

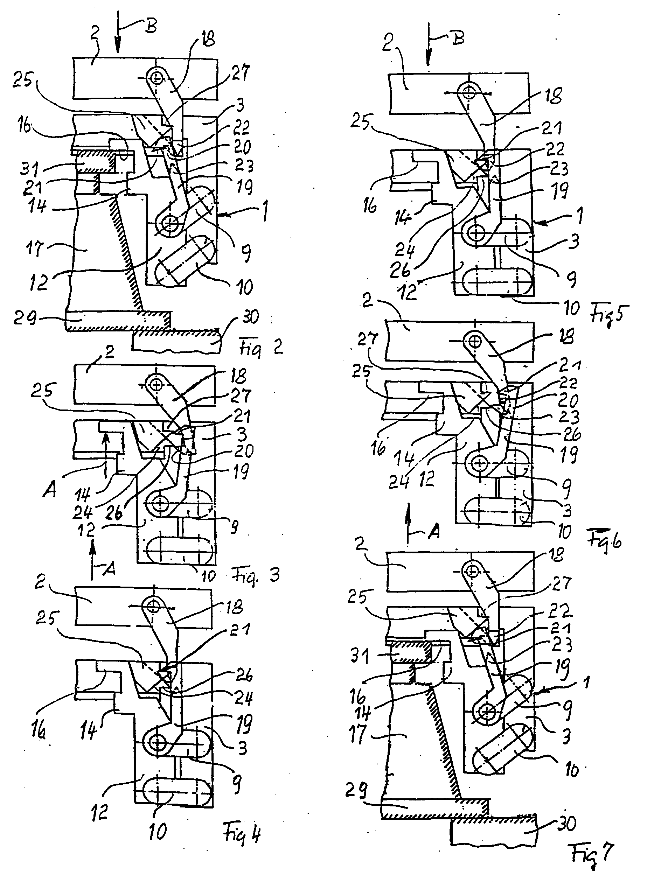

Die Greifvorrichtung weist einen Träger 1 auf, der aus einem Oberteil 2 und einem gegenüber diesem um begrenzte Beträge hin- und herverschiebbaren Unterteil 3 besteht. Zur Führung des Oberteiles 2 gegenüber dem Unterteil 3 dienen Führungssäulen 4. Die Verschiebbarkeit des Oberteiles 2 gegenüber dem Unterteil 3 wird in Richtung der Pfeile A und B durch Endanschläge 5 und 16 begrenzt. Am Unterteil 3 sind über parallele Lenker 7,8,9,10 zwei Greifarme 11 und 12 gelagert. An ihren oberen Enden weisen die Greifarme 11 und 12 Klauen 13,14 auf, von denen jede einen Anschlag 15 bzw. 16 bildet, über den vom jeweils aufzunehmenden Werkzeug 17 (vgl. Fig. 2) eine durch die Lenker 7 bis 10 geführte Greifbewegung in die Greifarme 11,12 einleitbar ist, wenn der Träger 1 mit Hilfe eines mit dem Oberteil 2 verbundenen, nicht dargestellten Auslegers eines Handhabungsgerätes über das Ende des aufzunehmenden Werkzeuges 17 gestülpt wird.

Zur Steuerung der Werkzeugaufnahme- und Freigabevorgänge dienen jeweils paarweise angeordnete Riegel und Steuerkurven. Wegen des weitgehend symmetrischen Aufbaus der Greifvorrichtung werden die vorgenannten Steuerorgane in den Figuren 2 bis 7 lediglich anhand der rechten Seite der Vorrichtung, und dies in vereinfachter Darstellung, erläutert.

Jedes Riegelpaar besteht aus einem am Oberteil 2 schwenkbar gelagerten oberen Riegel 18 und einem am Greifarm 11 bzw. 12 schwenkbar gelagerten Riegel 19. Die beiden Riegel 18 und 19 sind senkrecht zur Zeichnungsebene betrachtet zueinander versetzt angeordnet. Jeder Riegel 18 bzw. 19 weist an seinem freien Ende einen hakenförmigen Vorsprung 20 bzw. 21 auf und ist außerdem mit jeweils einem dachförmigen Steuernocken 22 bzw. 23 versehen. Die Steuernocken 22 bzw. 23 stehen dergestalt über die einander zugewandten Seiten der Riegel 18 bzw. 19 vor, daß sie aufeinander einwirken können.

Jedem der Riegel 18 bzw. 19 ist eine von zwei ebenfalls versetzt zueinander angeordneten Steuerkurven 24 bzw. 25 zugeordnet. Diese Steuerkurven 24 bzw. 25 sind mit jeweils einem nasen- bzw. hakenförmigen Rastanschlag 26 bzw. 27 versehen, von denen der Rastanschlag 26 der hinteren Steuerkurve 24 mit dem Vorsprung 20 des Riegels 18 und der Rastanschlag 27 der vorderen Steuerkurve 25 mit dem Vorsprung 21 des Riegels 19 in Eingriff treten kann.

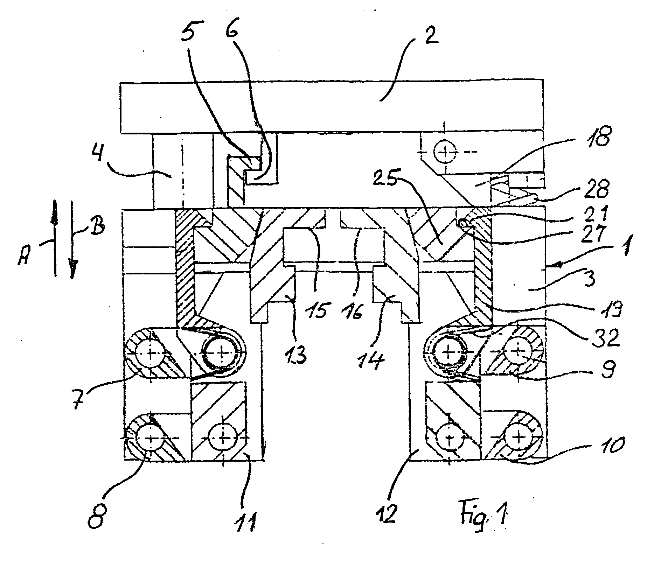

Figur 2 zeigt die Verhältnisse beim Aufnehmen eines Werkzeuges. Der Träger 1 wird in Richtung des Pfeiles B bewegt. Die Greifarme 11 und 12, von denen lediglich der rechte Greifarm 12 gezeigt ist, hängen an den Lenkern 9 und 10 in ihrer unteren Endlage, d.h. in der Aufnahmeposition für das Werkzeug. Dabei stützen sie sich mit ihren Rücken gegen eine Innenwand des Unterteils 3 ab. Der Vorsprung 20 des Riegels 18 greift hinter den Rastanschlag 26 der Steuerkurve 24 und verhindert eine Aufwärtsbewegung des Oberteiles 2 gegenüber dem Unterteil 3 unter der Einwirkung von Federn 28, von denen eine in Figur 1 dargestellt ist. Das Werkzeug 17 liegt in dieser Phase mit einem Bund 29 auf einem Stützlager 30 auf. Beim Absenken des Trägers 1 legt sich der Kopf 31 des Werkzeuges 17 gegen die Anschläge 15,16 an und hebt die Greifarme 11 und 12 hoch. Dabei bewegt sich das freie Ende des unter der Einwirkung einer in Figur 1 erkennbaren Feder 32 stehenden unteren Riegels 19 entlang der Steuerkurve 25 nach oben. Im Laufe dieser Bewegung kommt es zu einer Berührung zwischen dem Steuernocken 22 des oberen Riegels 18 und dem Steuernocken 23 des unteren Riegels 19. Aufgrund des Zusammenspiels zwischen den beiden Steuernocken 22 und 23 wird in den oberen Riegel 18 eine Schwenkbewegung entgegen dem Uhrzeigersinn eingeleitet, an deren Ende der Vorsprung 20 des oberen Riegels 18 den Rastanschlag 26 freigibt. Im Anschluß an das Ausklinken des oberen Riegels 18 wird der Träger 1 noch weiter abgesenkt, bis kurz vor Erreichen der unteren Endstellung des Trägers 1 der untere Riegel 19 mit seinem Vorsprung 21 hinter den Rastanschlag 27 schnappt. Gleichzeitig ist der Kopf 31 des Werkzeuges 17 formschlüssig von den Klauen 13 und 14 der Greifarme erfaßt und der Träger 1 kann in Richtung des Pfeiles A angehoben werden. Dabei entfernt sich das Oberteil 2 unter der Einwirkung der Feder 28 um einen gewissen Betrag vom Unterteil 3. Die Steuernokken 22 und 23 haben, wie aus Figur 4 erkennbar ist, in der nunmehr erreichten Halteposition nicht nur einen Abstand voneinander, sondern ihre Scheitel sind darüber hinaus gegenüber der Stellung in Figur 2 seitenversetzt.

Während die Figuren 2 bis 4 das Aufnehmen eines Werkzeuges zeigen, ist in den Figuren 5 bis 7 das Ablegen des Werkzeuges dargestellt, wobei die Figur 5 hinsichtlich der Anordnung der einzelnen Teile der Figur 4 und die Figur 7 der Figur 2 entspricht.

Zum Öffnen der von den Greifarmen 11,12 gebildeten Greifzange wird der Träger 1 in Richtung des Pfeiles B abgesenkt. Dabei gleitet der Vorsprung 20 des oberen Riegels 18 auf der ihm zugeordneten Steuerkurve 24 nach unten und es kommt zu einem erneuten Zusammentreffen der Steuernocken 22,23. Aufgrund der geänderten Relativlage der Scheitel der Steuernokken 22,23 wird nunmehr durch den Riegel 18 eine Schwenkbewegung im Uhrzeigersinn in den Riegel 19 eingeleitet, so daß dessen Vorsprung 21 den Rastanschlag 27 freigibt, wie dies in Figur 6 gezeigt ist. Sobald der Träger 1 seine unterste Stellung erreicht hat, d.h. der Bund 29 des Werkzeuges 17 erneut auf dem Stützlager 30 aufliegt, rastet der Vorsprung 20 des oberen Riegels 18 ein, d.h. er greift erneut hinter den Rastanschlag 26. Beim anschließenden Anheben des Trägers gibt der Steuernocken 22 den Steuernocken 23 frei und das freie Ende des unteren Riegels 19 gleitet an der Steuerkurve nach unten. Gleichzeitig geben die Greifarme 11,12 bzw. deren Klauen 13,14 den Kopf 31 des Werkzeuges 17 frei. Die in Figur 2 gezeigte Ausgangsposition ist erneut erreicht und der Vorgang kann von neuem beginnen.

## Patentansprüche

1. Greifvorrichtung zum Erfassen eines Gegenstandes, insbesondere eines Werkzeuges oder Werkstückes, mit Hilfe von zwei Greifarmen (11,12), die den Gegenstand in einer Aufnahmeposition aufnehmen und in einer Halteposition halten und die an einem Träger (1) gelagert sind, der längs mindestens einer Achse hin- und herbewegbar ist, um den jeweiligen Gegenstand zu ergreifen, wobei die Greifbewegung durch den aufzunehmenden Gegenstand in ihn einleitbar ist, **dadurch gekennzeichnet,** daß jeder Greifarm (11,12) über jeweils zwei Lenker (7,8 bzw. 9,10) mit dem Träger verbunden ist, daß jeder Greifarm (11,12) einen Anschlag (15 bzw. 16) aufweist, über den die Greifbewegung einleitbar ist, daß der Träger (1) aus einem Oberteil (2) und einem relativ zu diesem bewegbaren Unterteil (3) besteht, daß am Oberteil (2) des Trägers (1) mindestens ein hin- und herbewegbarer oberer Riegel (18) angeordnet ist, daß am Unterteil (3) des Trägers (1) mindestens ein unterer ebenfalls hin- und herbewegbarer Riegel (19) angeordnet ist, daß der obere und der untere Riegel (18 bzw. 19) im Zusammenspiel mit ihnen zugeordneten Steuerkurven (24 bzw. 25) durch Relativbewegungen zueinander abwechselnd in Verriegelungsstellungen überführbar sind und daß sich die Greifarme (11,12) in der Verriegelungsstellung des oberen Riegels (18) in der Aufnahmeposition und in der Verriegelungsstellung des unteren Riegels (19) in der Halteposition befinden.

2. Greifvorrichtung nach Anspruch 1, **dadurch gekennzeichnet,** daß am Oberteil (2) und am Unterteil (3) des Trägers (1) jeweils paarweise zusammenwirkende Riegel (18,19) angeordnet sind.

3. Greifvorrichtung nach Anspruch 1 oder 2, **dadurch gekennzeichnet,** daß die Riegel (18,19) schwenkbar am Träger (1) gelagert sind.

4. Greifvorrichtung nach einem der Ansprüche 1 bis 3, **dadurch gekennzeichnet,** daß die unteren Riegel (19) an den Greifarmen (11,12) gelagert sind.

5. Greifvorrichtung nach einem der Ansprüche 1 bis 4, **dadurch gekennzeichnet,** daß jeder Riegel (18,19) an seinem freien Ende einen hakenförmigen Vorsprung (20,21) aufweist.

6. Greifvorrichtung nach Anspruch 5, **dadurch gekennzeichnet,** daß dem hakenförmigen Vorsprung (20 bzw. 21) eines jeden Riegels (18 bzw. 19) ein Rastanschlag (26 bzw. 27) jeweils einer Steuerkurve (24 bzw. 25) zugeordnet ist.

7. Greifvorrichtung nach einem der Ansprüche 1 bis 6, **dadurch gekennzeichnet,** daß die Riegel (18 bzw. 19) mit jeweils einem Steuernocken (22 bzw. 23) zu ihrer gegenseitigen Betätigung während des Wechsels zwischen der Aufnahme- und der Halteposition versehen sind.

8. Greifvorrichtung nach Anspruch 7, **dadurch gekennzeichnet,** daß die Steuernocken (22,23) dachförmig ausgebildet sind.

9. Greifvorrichtung nach einem der Ansprüche 1 bis 8, **dadurch gekennzeichnet,** daß die Greifarme (11,12) zum Erfassen des von ihnen zu greifenden Gegenstandes dienende Klauen (13,14) aufweisen.

10. Greifvorrichtung nach Anspruch 9, **dadurch gekennzeichnet,** daß die Greifarme (11,12) sich in der Halteposition mit ihren den Klauen (13,14) gegenüberliegenden Seiten gegen das Unterteil (3) abstützen.

11. Greifvorrichtung nach einem der Ansprüche 1 bis 10, **dadurch gekennzeichnet,** daß das Oberteil (2) und das Unterteil (3) des Trägers (1) um durch Endanschläge (5,6) begrenzte Beträge in Vertikalrichtung zueinander verschiebbar sind.

12. Greifvorrichtung nach einem der Ansprüche 1 bis 11, **dadurch gekennzeichnet,** daß die oberen und unteren Riegel (18 bzw. 19) und die ihnen zugeordneten Steuerkurven (22 bzw. 23) seitlich zueinander versetzt angeordnet sind.
